# EUROPÄISCHE PATENTSCHRIFT

(11) **EP 3 086 442 B1**
(45) Veröffentlichungstag und Bekanntmachung des Hinweises auf die Patenterteilung: **27.05.2020**
(21) Anmeldenummer: 15164650.2
(22) Anmeldetag: 22.04.2015
(51) Int. Cl.: H02K 3/12, H02K 7/18

(54) **ELEKTRISCHE MASCHINE MIT EINEM ERSTEN AKTIVTEIL UND EINEM ZWEITEN AKTIVTEIL**
ELECTRIC MACHINE WITH A FIRST AND A SECOND ACTIVE PART
MACHINE ÉLECTRIQUE DOTÉ D'UNE PREMIÈRE PARTIE ACTIVE ET D'UNE SECONDE PARTIE ACTIVE

(43) Veröffentlichungstag der Anmeldung: 26.10.2016
(73) Patentinhaber: Siemens Aktiengesellschaft, 80333 München (DE)
(72) Erfinder: Brenner, Robin, 94036 Passau (DE); Lindmeier, Andreas, 94099 Ruhstorf (DE); Schönbauer, Norbert, 94072 Bad Füssing (DE)

(56) Entgegenhaltungen:
- EP-A1- 2 020 731
- EP-A1- 2 211 443
- EP-A1- 2 395 632
- EP-A1- 2 416 471
- EP-A2- 1 246 341
- US-B1- 6 459 187

## Beschreibung

Die vorliegende Erfindung betrifft eine elektrische Maschine mit einem ersten Aktivteil und einem zweiten Aktivteil. Dabei ist das zweite Aktivteil in Bewegungsrichtung relativ zu dem ersten Aktivteil bewegbar. Das erste Aktivteil umfasst mindestens ein erstes Aktivteilsegment und mindestens ein zweites Aktivteilsegment. Ferner weist das erste Aktivteil mindestens eine Wicklung auf, welche einen ersten Wicklungsabschnitt und einen zweiten Wicklungsabschnitt umfasst. Des Weiteren weist das erste Aktivteilsegment Nuten auf, in denen der erste Wicklungsabschnitt angeordnet ist. Auch das zweite Aktivteilsegment weist Nuten auf, in denen der zweite Wicklungsabschnitt angeordnet ist.

Elektrische Maschinen und Motoren, Generatoren und Transformatoren besitzen jeweils ein oder mehrere Aktivteile, die magnetisch aktiv sind. Ein Motor beispielsweise weist einen Stator und einen Rotor als jeweiliges Aktivteil auf.

In dem Stator und/oder Rotor eines Motors oder Generators können Spulen eingelegt beziehungsweise eingewickelt sein. Typischerweise befinden sich die Spulen dann in oder an einem Blechpaket oder Eisenpaket. In der Regel ragen aus den Wickelkopfseiten der zylindrischen oder hohlzylindrischen Blechpakete die Spulen heraus und bilden einen Wickelkopf des Rotors beziehungsweise Stators.

Bei elektrischen Motoren oder Generatoren mit hoher Baugröße werden aufgrund der Verarbeitbarkeit und Transportierbarkeit die Blechpakete oder Eisenpakete segmentiert. Derartige Generatoren mit hoher Baugröße werden beispielsweise in Windkraftanlagen verwendet. Segmentierte Eisenpakete oder Blechpakete werden beispielsweise bei Generatoren einer Windkraftanlage verwendet. Diese Segmentierbarkeit bietet allerdings für die Wicklungstechnik einige Nachteile. Bei segmentierten Blechpaketen ist die Verwendung von Zweischichtwicklungen nicht möglich. Dies führt dann zu Sondermaßnahmen, wie beispielsweise Klappspulen oder Einschichtwicklungen. Werden zum Beispiel Klappspulen-Zweischichtwicklungen verwendet, so bedarf es beim Verbau der Segmente eines aufwendigen Spuleneinbaus und Spulenisolierung. Des Weiteren ist der Tausch von defekten Segmenten sehr zeit- und kostenaufwendig. Werden anstelle Klappspulen-Zweischichtwicklungen Einschichtwicklungen verwendet, so sind die Spulendimensionen sehr groß und es sind unterschiedliche Spulenformen notwendig.

In der EP 2 020 731 A1 ist ein Stator für eine dynamoelektrische Maschine beschrieben. Ein Blechpaket des Stators besteht aus Einzelblechen. In Nuten des Blechpakets sind Wicklungen angeordnet. Ein Wicklungsendbereich der Wicklungen ragt an einer Stirnseite des Blechpakets heraus.

Die EP 2 211 443 A1 betrifft einen Stator eines Ringgenerators mit einem Statorsegment und einem weiteren Statorsegment. Die jeweiligen Statorsegmente umfassen einen Grundkörper und ein Spulenelement, welches an dem Grundkörper angeordnet ist. Zwischen den jeweiligen Statorsegmenten befindet sich ein Verbindungsbereich, in welchem die Spulenelemente des jeweiligen Statorsegments mittels eines Verbindungsspulenelements verbunden sind.

Aus der EP 1 246 341 A2 geht ein Stator für eine dynamoelektrische Maschine hervor. Der Stator weist einen Statorkern auf, welcher durch Zusammenführen zumindest eines geschichteten Kernteils zu einem zylindrischen Statorkern geformt ist. Ferner weist der Stator eine Statorwicklung auf, welche in dem Statorkern angeordnet ist. Die Statorwicklung ist so angeordnet, dass ein Leiterdraht abwechselnd eine innere Lage und eine äußere Lage in Schlitzen des Statorkerns belegt.

Die Aufgabe der Erfindung besteht darin, eine Wicklung einer elektrischen Maschine mit einem segmentierten Aktivteil besonders effizient zu gestalten und auszulegen.

Diese Aufgabe wird erfindungsgemäß durch die Gegenstände der unabhängigen Patentansprüche gelöst. Vorteilhafte Weiterbildungen der Erfindung ergeben sich durch die Merkmale der abhängigen Patentansprüche.

Erfindungsgemäß wird diese Aufgabe gelöst durch eine elektrische Maschine mit einem ersten Aktivteil und einem zweiten Aktivteil. Dabei ist das zweite Aktivteil in Bewegungsrichtung relativ zu dem ersten Aktivteil bewegbar. Mit anderen Worten ist das erste Aktivteil stationär zum zweiten Aktivteil angeordnet. Des Weiteren umfasst das erste Aktivteil mindestens ein erstes Aktivteilsegment und mindestens ein zweites Aktivteilsegment. Das Aktivteil kann auch mehr als zwei Aktivteilsegmente umfassen. Mit Segmente ist hier gemeint, dass das Blechpaket des ersten Aktivteils relativ zur der Bewegungsrichtung des zweiten Aktivteils segmentiert ist. Ferner weist das erste Aktivteil mindestens eine Wicklung auf, welche einen ersten Wicklungsabschnitt und einen zweiten Wicklungsabschnitt umfasst. Des Weiteren weist das erste Aktivteilsegment Nuten auf, in denen der erste Wicklungsabschnitt angeordnet ist. Auch das zweite Aktivteilsegment weist Nuten auf, in denen der zweite Wicklungsabschnitt angeordnet ist.

Das Wicklungssystem des ersten Aktivteils weist somit beispielsweise eine einzige Wicklung auf. Die Wicklung kann mehrere Leiter umfassen, welche einer Phase zugeordnet sind. Eine Wicklung kann also mehrere Phasen aufweisen. Diese Wicklung kann je nach Anzahl der Aktivteilsegmente in Wicklungssegmente, also Wicklungsabschnitte, aufgeteilt sein. Das heißt die mindestens eine Wicklung setzt sich aus dem ersten Wicklungsabschnitt und dem zweiten Wicklungsabschnitt zusammen. Würde das erste Aktivteil beispielsweise drei Aktivteilsegmente umfassen, so würde die Wicklung in drei Wicklungsabschnitte aufgeteilt sein. Ein Wicklungsabschnitt ist also ein Abschnitt der mindestens einen Wicklung, welcher in den Nuten des jeweiligen Aktivteilsegments angeordnet ist.

Somit kann das ersten Aktivteilsegment und das zweites Aktivteilsegment ein Blechpaketsegment oder ein Eisenpaketsegment, welches Nuten aufweist, umfassen. In die Nuten des jeweiligen Blechpaketsegments oder Eisenpaketsegments ist ein erster Wicklungsabschnitt oder ein zweiter Wicklungsabschnitt eingelegt. Der erste Wicklungsabschnitt weist ferner ein erstes Anschlusselement auf, welches an einer ersten Stirnseite des ersten Aktivteilsegments angeordnet ist. Der zweite Wicklungsabschnitt weist ein zweites Anschlusselement auf, welches an einer zweiten Stirnseite des zweiten Aktivteilsegments angeordnet ist. Mit Anschlusselement ist hier beispielsweise ein Endbereich des ersten und zweiten Wicklungsabschnitts gemeint. Das Anschlusselement ist dabei Teil des jeweiligen Wicklungsabschnitts. Mit anderen Worten weisen der erste und der zweite Wicklungsabschnitt einen Endbereich auf, welcher an der jeweiligen Wickelkopfseite des jeweiligen Aktivteilsegments, herausragen kann. Somit kann das Anschlusselement des Wicklungsabschnitts wie ein Wicklungsüberhang des Wicklungsabschnitts an einer Wickelkopfseite aus einer Nut des Aktivteilsegments herausragen.

Ferner sind die erste Stirnseite des ersten Aktivteilsegments und die zweite Stirnseite des zweiten Aktivteilsegments in Bewegungsrichtung des zweiten Aktivteils aneinander angrenzend und parallel zueinander angeordnet. Mit anderen Worten sind die erste Stirnseite des ersten Aktivteilsegments und die zweite Stirnseite des zweiten Aktivteilsegments im Wesentlichen senkrecht zur Bewegungsrichtung des zweiten Aktivteilsegments und parallel zueinander angeordnet. Mit Stirnseite des Aktivteilsegments ist beispielsweise die Fläche gemeint, welche sich an einem Ende des Aktivteilsegments beziehungsweise Blechpaketsegments senkrecht zur Haupterstreckungsrichtung des Aktivteilsegments oder Blechpaketsegments erstreckt. Des Weiteren sind das erste Anschlusselement und das zweite Anschlusselement nebeneinander angeordnet. Mit anderen Worten sind das erste Aktivteilsegment und das zweite Aktivteilsegment einander zugeordnet. Ferner sind das erste und das zweite Anschlusselement verbunden.

Das erste Aktivteil der elektrischen Maschine kann auch mehrere Aktivteilsegmente umfassen, wobei bei benachbarten Aktivteilsegmenten jeweils das erste und das zweite Anschlusselemente miteinander elektrisch verbunden sind. Durch das elektrische Verbinden der ersten und zweiten Anschlusselemente werden die einzelnen Wicklungsabschnitte elektrisch miteinander zu der Wicklung des ersten Aktivteils verbunden. Die Wicklung kann auch entsprechende Kontaktelemente aufweisen, an denen die Wicklung mit einer Spannungsquelle verbunden werden kann oder an welchen eine in der Wicklung erzeugte elektrische Spannung abgegriffen werden kann.

Durch die Gestaltung beziehungsweise Aufteilung der Wicklung ergibt sich der Vorteil, dass die Segmente - erstes Aktivteilsegment und zweites Aktivteilsegment - beim Hersteller komplett fertig gestellt werden können. Weiterhin ist die Austauschbarkeit beim Kunden viel leichter vorzunehmen.

Durch die Anordnung der Aktivteilsegmente - erstes Aktivteilsegment und zweites Aktivteilsegment - sowie der jeweiligen Anschlusselemente - erstes Anschlusselement und zweites Anschlusselement - zueinander kann zwischen dem ersten Aktivteilsegment und dem zweiten Aktivteilsegment ein Segmentübergangsbereich ausgebildet sein. In diesem Segmentübergangsbereich sind das erste Anschlusselement des ersten Aktivteilsegments und das zweite Anschlusselement des zweiten Aktivteilsegments einander zugeordnet.

Erfindungsgemäß sind das erste Anschlusselement und das zweite Anschlusselement in Bewegungsrichtung des zweiten Aktivteils senkrecht zur Bewegungsrichtung des zweiten Aktivteils nebeneinander angeordnet. Mit anderen Worten können das erste Anschlusselement und das zweite Anschlusselement in Bewegungsrichtung des zweiten Aktivteils senkrecht zur Bewegungsrichtung des zweiten Aktivteils in Überdeckung zueinander, also übereinander, angeordnet sein.

Alternativ sind das erste Anschlusselement und das zweite Anschlusselement in Bewegungsrichtung des zweiten Aktivteils erfindungsgemäß nebeneinander angeordnet. Mit anderen Worten können das erste Anschlusselement und das zweite Anschlusselement in Bewegungsrichtung des zweiten Aktivteils parallel zueinander angeordnet sein. Durch die jeweilige Ausführungsform ergibt sich der Vorteil, dass bei einer Aneinanderreihung der Aktivteilsegmente die Windungsabschnitte auf besonders einfache Art und Weise miteinander verbunden werden können.

Erfindungsgemäß umfasst die mindestens eine Wicklung mehrere Windungen, welche mehrere Teilleiter aufweist. Die mindestens eine Wicklung kann beispielsweise vier Windungen aufweisen. Jede Windung kann beispielsweise jeweils drei Teilleiter umfassen. Im Segmentübergangsbereich liegen die Windungen mit ihren Teilleitern des ersten Anschlusselements und des zweite Anschlusselement frei. Werden die Aktivteilsegmente miteinander verbunden, so sind die Windungen des ersten Anschlusselements den Windungen des zweiten Anschlusselements entsprechend zugeordnet. Ferner sind die Windungen des ersten Anschlusselements und die Windungen des zweiten Anschlusselements in Bewegungsrichtung des zweiten Aktivteils abwechselnd nebeneinander oder die Windungen des ersten Anschlusselements und die Windungen des zweiten Anschlusselements in Bewegungsrichtung des zweiten Aktivteils senkrecht zur Bewegungsrichtung des zweiten Aktivteils nebeneinander angeordnet.

In vorteilhafter Weise sind das erste Aktivteilsegment und das zweite Aktivteilsegment auf einem Trägerelement angeordnet. Dabei kann das Trägerelement beispielsweise als Stütze für das erste Aktivteilsegment und das zweite Aktivteilsegment dienen. Die jeweiligen Aktivteilsegmente - erstes Aktivteilsegment und zweites Aktivteilsegment - können an dem Trägerelement, beispielsweise mittels einer Schraubverbindung, fixiert sein. Dadurch ergibt sich der Vorteil, dass die Anordnung der Aktivteilsegmente der elektrischen Maschine besonders stabil und zugleich besonders genau zueinander erfolgen kann.

Eine weitere Ausführungsform der Erfindung sieht vor, dass das erste Anschlusselement und das zweite Anschlusselement mittels einer Anschlussverbindung verbunden sind. Durch die Anschlussverbindung sind ferner beispielsweise der erste Wicklungsabschnitt und der zweite Wicklungsabschnitt elektrisch miteinander verbunden. Vorzugsweise kann die Anschlussverbindung als Quetschverbindung oder als Lötverbindung ausgebildet sein. Dadurch ergibt sich der Vorteil, dass die Verbindung besonders stabil ist. Auch andere Verbindungsarten zwischen dem ersten Anschlusselement und dem zweiten Anschlusselement können denkbar sein.

Die Anschlussverbindung zwischen dem ersten Anschlusselement und dem zweiten Anschlusselement kann als lösbare Verbindung und/oder als unlösbare Verbindung ausgestaltet sein. Bei einer lösbaren Verbindung kann beispielsweise zwischen dem ersten Anschlusselement und dem zweiten Anschlusselement eine Klemmverbindung vorgesehen sein. Diese Klemmverbindung kann nach dem Prinzip der Lüsterklemme umgesetzt werden. Durch die lösbare Verbindung ergibt sich der Vorteil, dass die jeweiligen Segmente besonders einfach auszutauschen sind.

In vorteilhafter Weise können das erste Anschlusselement und/oder das zweite Anschlusselement mittels eines Isolierelements elektrisch isoliert sein. Vorzugsweise ist das Isolierelement als Imprägnierharz und/oder als Schrumpfschlauch ausgebildet. Dadurch ergibt sich der Vorteil, dass die jeweiligen Anschlusselemente besonders einfach und auf kostengünstige Art und Weise isoliert werden können.

In vorteilhafter Weise ist das zweite Aktivteil als Stator oder Rotor ausgebildet. Durch das segmentierte Aktivteil kann die entsprechende elektrische Maschine kompakter aufgebaut werden als eine Maschine mit einem herkömmlichen Stator beziehungsweise Rotor mit üblicher Wicklungsgestaltung.

Zu der Erfindung gehört ferner eine Windkraftanlage mit einer elektrischen Maschine. Die elektrische Maschine ist insbesondere eine Ausführungsform der erfindungsgemäßen elektrischen Maschine.

Die zuvor im Zusammenhang mit der elektrischen Maschine beschriebenen Vorteile und Weiterbildungen können auch auf die Windkraftanlage übertragen werden.

Im Folgenden sind Ausführungsbeispiele der Erfindung beschrieben. Es zeigen:
- FIG 1: eine schematische Darstellung eines Querschnitts einer Ausführungsform der erfindungsgemäßen elektrischen Maschine;
- FIG 2: eine schematische Darstellung eines segmentierten Eisenkerns der erfindungsgemäßen elektrischen Maschine;
- FIG 3: eine schematische Darstellung eines ersten Aktivteilsegments der erfindungsgemäßen elektrischen Maschine;
- FIG 4: eine schematische Darstellung eines Ausschnitts des ersten und des zweiten Aktivteilsegments in einem Übergangsbereich mit einer ersten Ausführungsform der Anordnung des ersten Anschlusselements und des zweiten Anschlusselements der erfindungsgemäßen elektrischen Maschine;
- FIG 5: eine schematische Darstellung einer Verbindung der Anschlusselemente nach FIG 4;
- FIG 6: eine schematische Darstellung eines Ausschnitts des ersten und des zweiten Aktivteilsegments in einem Übergangsbereich mit einer zweiten Ausführungsform der Anordnung des ersten Anschlusselements und des zweiten Anschlusselements der erfindungsgemäßen elektrischen Maschine; und
- FIG 7: eine schematische Darstellung einer Verbindung der Anschlusselemente nach FIG 6.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

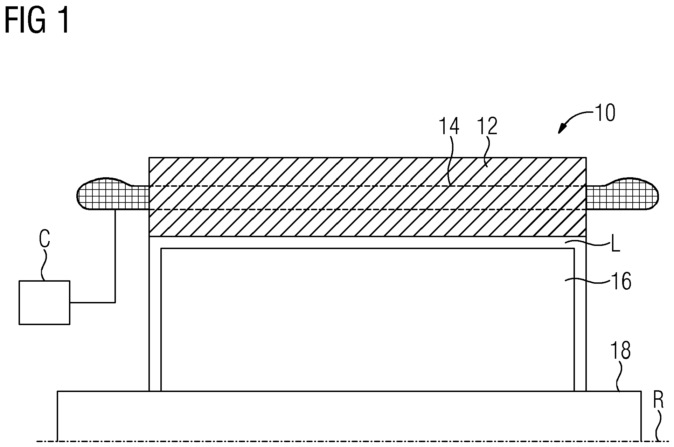

In FIG 1 ist ein allgemeiner Aufbau einer elektrischen Maschine 10 dargestellt. Bei der elektrischen Maschine 10 kann es sich beispielsweise um einen Motor oder einen Generator handeln. Die elektrische Maschine 10 kann beispielsweise als Generator einer Windkraftmaschine verwendet werden. In FIG 1 stellt eine Rotationsachse R auch eine Symmetrieachse der Darstellung dar. Die elektrische Maschine 10 umfasst ein erstes Aktivteil 12 in Form eines Stators, in welchem Wicklungen elektrischer Spulen angeordnet sind, wobei in FIG 1 nur eine der Wicklungen 14 dargestellt ist. Die Wicklungen 14 werden durch eine Drehstromquelle C abwechselnd bestromt, wodurch im Inneren des Stators ein magnetisches Drehfeld in einem Luftspalt L der elektrischen Maschine 10 entsteht. Die Drehstromquelle C kann beispielsweise ein Wechselrichter sein oder ein festfrequentes elektrisches Versorgungsnetz.

Im Inneren des ersten Aktivteils 12 befindet sich ein zweites Aktivteil 16 in Form eines Rotors, der drehfest mit einer Welle 18 verbunden ist. Die Welle 18 ist um die Rotationsachse R drehbar und in dem ersten Aktivteil 12 gelagert. Die Erfindung wird anhand einer elektrischen Maschine 10 mit innenliegendem Rotor beschrieben. Bei der elektrischen Maschine 10 kann sich aber auch um einen außenliegenden Rotor handeln. Bei einem außenliegenden Rotor ist der Stator im Inneren des Rotors angeordnet. Ferner kann es sich auch um einen Linearmotor handeln.

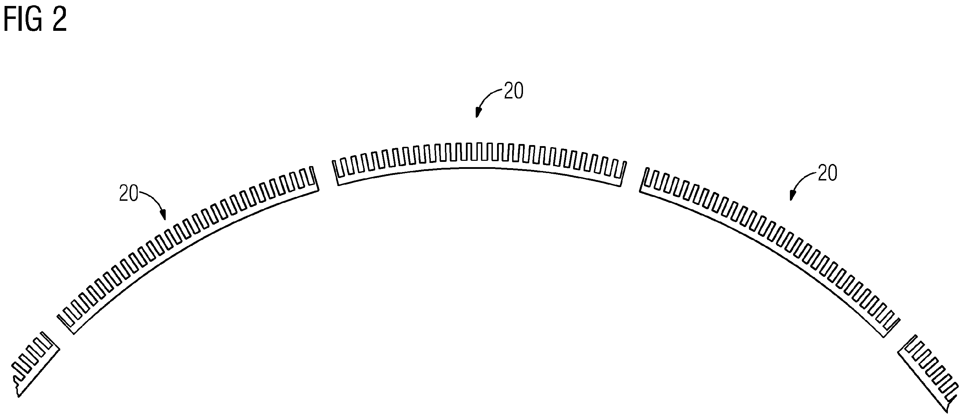

In FIG 2 ist ein Eisenpaket mit Eisenpaketsegmenten 20 dargestellt. Bei elektrischen Motoren oder Generatoren mit großer Baugröße wird aufgrund der Verarbeitbarkeit und Transportierbarkeit das Eisenpaket segmentiert. Da die elektrische Maschine 10 rotatorisch ausgebildet ist, sind die Eisenpaketsegmente 20 kreisförmig um die Rotationsachse R gebogen. Würde es sich bei der elektrischen Maschine 10 um eine Linearmaschine handeln, wären die Eisenpaketsegmente 20 gerade. Die Eisenpaketsegmente 20 sind, wie FIG 2 zu entnehmen ist, vorzugsweise gleich aufgebaut.

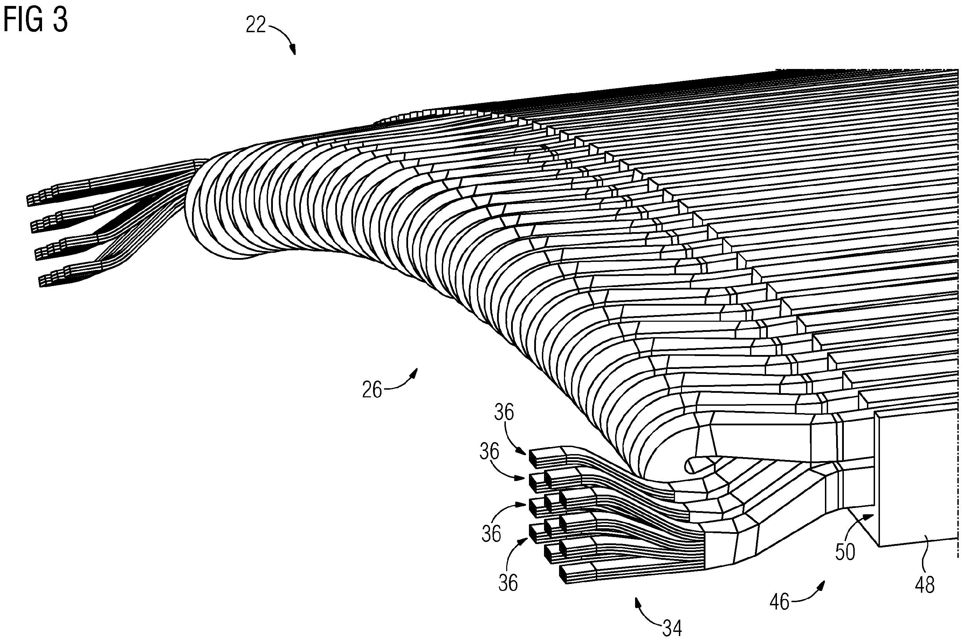

In FIG 3 ist das erfindungsgemäße erste Aktivteilsegment 22 dargestellt. Das erste Aktivteilsegment 22 ist Teil des ersten Aktivteils 12, welches sich aus mindestens einem ersten Aktivteilsegment 22 und mindestens einem zweiten Aktivteilsegment (in FIG 3 nicht dargestellt) zusammensetzt. Bei dem ersten Aktivteil 12 kann es sich insbesondere um einen Stator handeln.

Das erste Aktivteilsegment 22 umfasst, wie in FIG 2 dargestellt, ein Eisenpaketsegment 20 mit ersten Nuten 30. In die ersten Nuten 30 ist ein erster Wicklungsabschnitt 26 angeordnet beziehungsweise eingelegt. An einem ersten Ende 46 des ersten Aktivteilsegments 22 ragt an einer ersten Wickelkopfseite 50 aus einer der ersten Nuten 30 ein erstes Anschlusselement 34 heraus. Das erste Anschlusselement 34 des ersten Wicklungsabschnitts 26 ragt wie auch der Wicklungsüberhang des Wicklungsabschnitts 26 an einer Wickelkopfseite 50 aus einer der ersten Nuten 30 des Eisenpaketsegments 20 heraus. Das erste Aktivteilsegment 22 kann ferner, wie FIG 3 zu entnehmen ist, an einem dem ersten Ende 46 gegenüberliegenden weiteren Ende ein weiteres Anschlusselement, welches analog zum ersten Anschlusselement 34 ausgebildet sein kann, umfassen.

In FIG 3 ist ferner gezeigt, dass der erste Wicklungsabschnitt 26 mehrere Windungen umfasst, welche mehrere Teilleiter aufweisen. Nach diesem Ausführungsbeispiel weist der erste Wicklungsabschnitt 26 vier erste Windungen 36 auf. Jede Windung umfasst jeweils drei erste Teilleiter 38. Gerade am ersten Anschlusselement 34 ist diese Aufteilung des ersten Wicklungsabschnitts 26 ersichtlich. Diese Aufteilung, d.h. die Anzahl der Windungen und die Anzahl der Teilleiter pro Windung, gilt analog für den zweiten Wicklungsabschnitt (in FIG 3 nicht dargestellt). Das erste Anschlusselement 34 ist im Gegensatz zum restlichen ersten Wicklungsabschnitt 26 abisoliert, d.h. die ersten Windungen 36 mit ihren ersten Teilleitern 38 ragen einzeln aus der ersten Wickelkopfseite 50.

Im einfachsten Fall ist in jeder Nut der ersten Nuten 30 des ersten Aktivteilsegments 22 ein Wicklungsteil einer einzigen Wicklung des Wicklungssystems angeordnet. Ein weiterer Wicklungsteil der Wicklung liegt in einer anderen Nut 30 des Aktivteilsegments 22. In jeder Nut 30 des Aktivteilsegments 22 liegt jeweils nur ein Wicklungsteil einer von mehreren Wicklungen des Wicklungssystems. Ein derartiges Wicklungssystem wird auch als Einschichtwicklung bezeichnet.

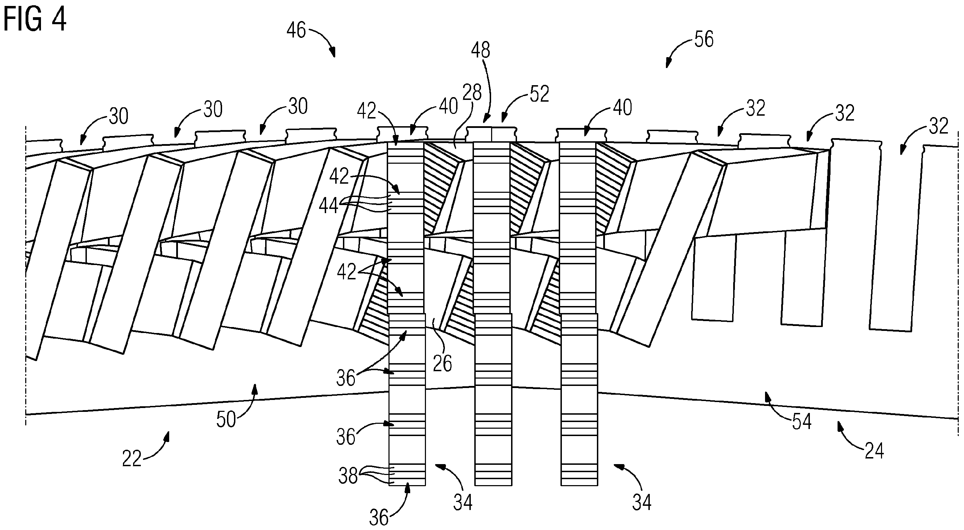

In FIG 3 ist eine Zweischichtwicklung dargestellt. Der erste Wicklungsabschnitt 26 setzt sich aus drei parallel in einzelnen Nuten 30 nebeneinander angeordnete Leitern zusammen. Somit weist auch das erste Anschlusselement 34 drei Leiter auf. Die drei Leiter sind aufeinanderfolgend um drei Nuten 30 versetzt gewickelt. Jeder der drei Leiter ist einer Phase zugeordnet. In jeder der ersten Nuten 30 des ersten Aktivteilsegments 22 ist ein Leiterschenkel eines Leiters und ein weiterer Leiterschenkel eines weiteren Leiters angeordnet. Der andere Leiterschenkel des einen Leiters und der andere Leiterschenkel des weiteren Leiters sind in zwei anderen Nuten der ersten Nuten 30 des ersten Aktivteilsegments 22 angeordnet. Die in FIG 3 für das erste Aktivteilsegment 22 beschriebene Ausführungsform kann auch auf das zweite Aktivteilsegment 24 angewendet werden, das bevorzugt baugleich zu dem ersten Aktivteilsegment 22 ausgebildet ist. So umfasst das zweite Aktivteilsegment 24, wie beispielsweise in FIG 4 dargestellt, ein Eisenpaketsegment 20 mit zweiten Nuten 32. In die zweiten Nuten 32 ist ein zweiter Wicklungsabschnitt 28 angeordnet beziehungsweise eingelegt. An einem zweiten Ende 56 des zweiten Aktivteilsegments 24 ragt an einer zweiten Wickelkopfseite 54 aus einer der zweiten Nuten 3 ein zweites Anschlusselement 40 heraus. Aus FIG 4 geht ferner hervor, dass der zweite Wicklungsabschnitt 28 mehrere zweite Windungen 42 umfasst, welche mehrere zweite Teilleiter 44 aufweisen.

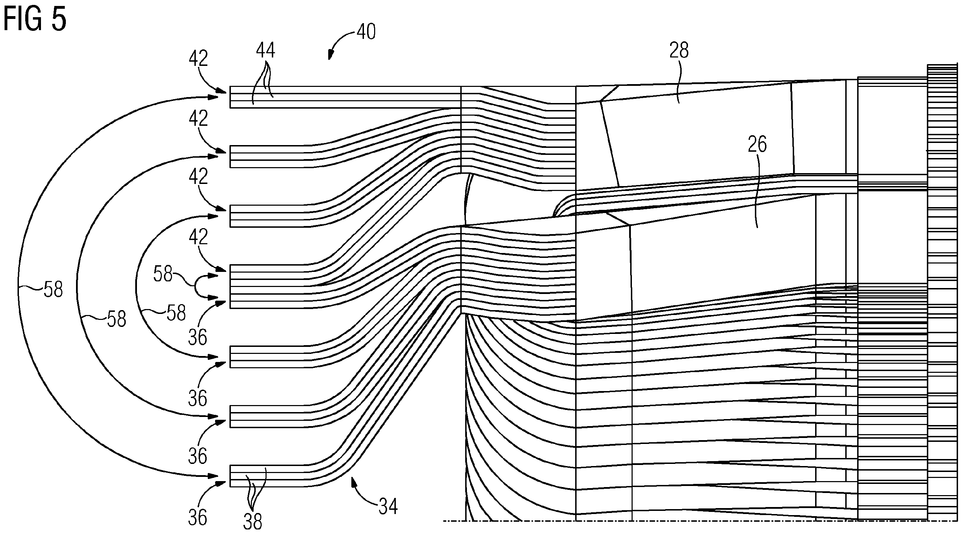

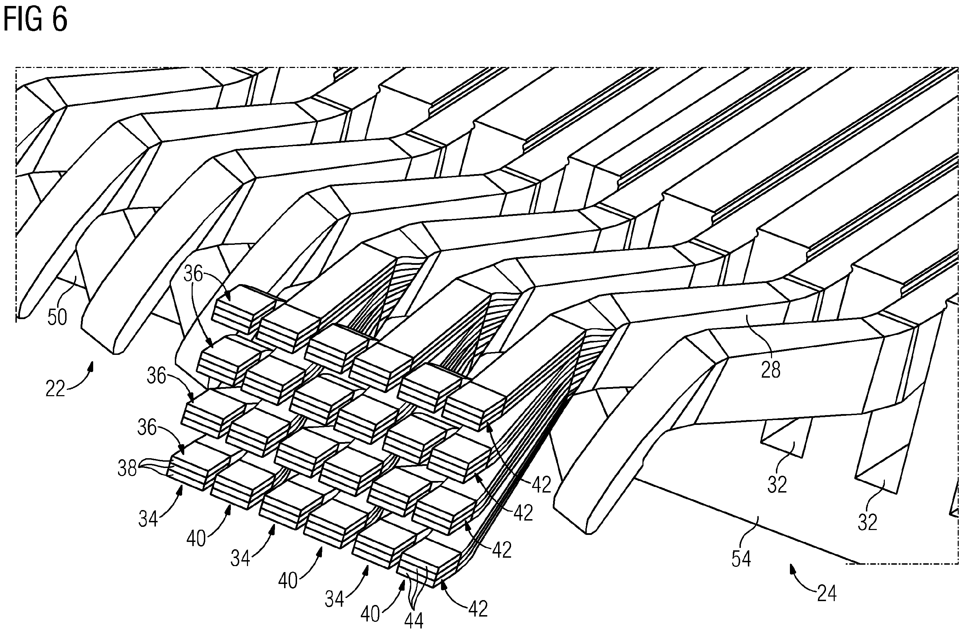

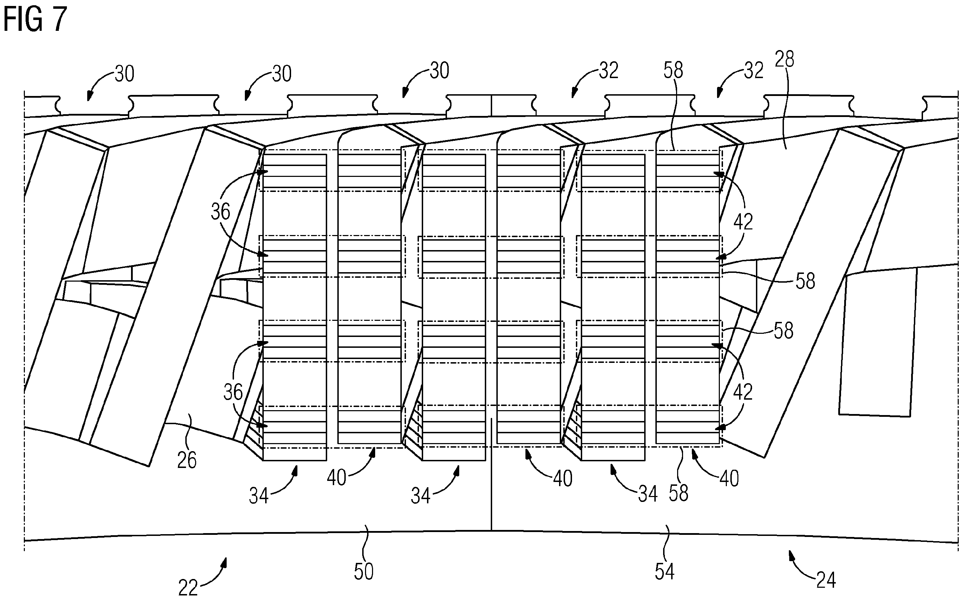

In Zusammenschau der FIG 4 und 5 wird eine erste Ausführungsform einer Anordnung des ersten Anschlusselements 34 und des zweiten Anschlusselements 40 bei einer Verbindung des ersten Aktivteilsegments 22 mit dem zweiten Aktivteilsegment 24 beschrieben. Durch die Zusammenschau der FIG 6 und 7 wird die zweite Ausführungsform der Anordnung einer Anordnung des ersten Anschlusselements 34 und dem zweiten Anschlusselement 40 bei einer Verbindung des ersten Aktivteilsegments 22 mit dem zweiten Aktivteilsegment 24 beschrieben.

In den FIG 4 bis 7 ist ein Ausschnitt des ersten Aktivteils 12 mit dem ersten Aktivteilsegment 22 und dem zweiten Aktivteilsegment 24 dargestellt. In den jeweiligen Aktivteilsegmenten 22, 24 ist, wie bereits anhand von FIG 3 und FIG 4 beschrieben, ein jeweiliger Wicklungsabschnitt 26, 28 in den jeweiligen Nuten 30, 32 angeordnet. Der erste Wicklungsabschnitt 26 weist dabei das erste Anschlusselement 34 auf, welches in drei Leiter unterteilt ist. Auch der zweite Wicklungsabschnitt 28 weist ein zweites Anschlusselement 40 auf, welches ebenfalls in drei Leiter unterteilt ist. Das zweite Anschlusselement 40, und somit jeder Leiter, umfasst zweite Windungen 42. Jede Windung weist weiterhin zweite Teilleiter 44 auf. In den Ausführungsformen der FIG 4 bis 7 umfasst auch das zweite Anschlusselement 40 vier zweite Windungen 42 mit je drei zweiten Teilleitern 44.

Die erste Stirnseite 48 an dem ersten Ende 46 des ersten Aktivteilsegments 22 und die zweite Stirnseite 52 an dem zweiten Ende 52 des zweiten Aktivteilsegments 24 sind aneinander angrenzend angeordnet.

Um die Wicklung 14 des ersten Aktivteils 12 umzusetzen, wird in einem Segmentübergangsbereich das erste Anschlusselement 34 mit dem zweiten Anschlusselement 40 verbunden. Dazu werden gemäß einer ersten Ausführungsform (FIG 4 und 5) das erste Anschlusselement 34 und das zweite Anschlusselement 40 senkrecht zur Bewegungsrichtung des zweiten Aktivteils (in FIG 4 bis FIG 7 nicht dargestellt) in Überdeckung zueinander, also übereinander, angeordnet. In diesem Fall ist das zweite Anschlusselement 40 über dem ersten Anschlusselement 34 angeordnet. Somit sind auch die jeweiligen Leiter der jeweiligen Anschlusselemente 34, 40 übereinander angeordnet. Wie in FIG 4 und 5 gezeigt sind also insgesamt zwei Leiter und somit sechs Windungen übereinander angeordnet.

Anstelle die Anschlusselemente 34, 40 übereinander anzuordnen, können gemäß den FIG 6 und 7 das erste Anschlusselement 34 und das zweite Anschlusselement 40 in Bewegungsrichtung des zweiten Aktivteils parallel nebeneinander angeordnet sein. Dabei sind die jeweiligen Leiter der jeweiligen Anschlusselemente 34, 40 abwechselnd nebeneinander angeordnet.

Sieht das Wicklungssystem der elektrischen Maschine 10 eine Mehrschichtwicklung, beispielsweise in Form einer Dreischichtwicklung oder einer Vierschichtwicklung, vor, so kann auch eine Kombination der ersten und der zweiten Ausführungsform zur Anordnung der Anschlusselemente 34, 40 vorgesehen sein.

Um den ersten Wicklungsabschnitt 26 und den zweiten Wicklungsabschnitt 28 zu der Wicklung 14 zu verbinden, ist in FIG 5 anhand von Pfeilen die Anschlussverbindung 58 zwischen den ersten Windungen 36 und den zweiten Windungen 42 verdeutlicht. Darin ist jeweils eine Windung der ersten Windungen 36 mit einer Windung der zweiten Windungen 42 verbunden. In FIG 7, in der die Anschlusselemente 34, 40 in Bewegungsrichtung nebeneinander angeordnet sind, ist die Anschlussverbindung 58 in Form einer Umrandung dargestellt. Verbunden ist jeweils eine Windung der ersten Windungen 36 mit einer Windung der zweiten Windungen 42.

Die Anschlussverbindung 58 kann für beide Ausführungsformen als lösbare oder unlösbare Anschlussverbindung vorgesehen sein. Als lösbare Anschlussverbindung 58 kann beispielsweise eine Klammerung nach dem Prinzip der Lüsterklemme erfolgen. Für unlösbare Verbindungen kann eine Quetschverbindung oder eine Lötverbindung vorgesehen sein.

Insgesamt geht somit eine segmentierte Zweischichtwicklung mit Halbspulen für Segmentverbindungen hervor. Bei elektrischen Motoren oder Generatoren mit hoher Baugröße werden aufgrund der Verarbeit- und Transportierbarkeit die Eisenpakete segmentiert. Diese Segmentierbarkeit bietet allerdings für die Wicklungstechnik einige Nachteile, zum Beispiel ist die Verwendung von herkömmlichen Zweischichtwicklungen nicht möglich. Dies führt dann zu besonderen Maßnahmen wie beispielsweise Klappspulen oder Einschichtwicklungen. Bei der Verwendung von Klappspulen-Zweischichtwicklungen sind beim Verbau der Segmente ein aufwendiger Spuleneinbau und -isolierung notwendig. Auch der Tausch von defekten Segmenten ist sehr zeit- und kostenaufwendig. Bei der Verwendung von Einschichtwicklungen sind die Spulendimensionen sehr groß und zusätzlich unterschiedliche Spulenformen notwendig.

Gemäß der vorliegenden Erfindung werden lediglich im Segmentübergangsbereich anstatt von kompletten Spulen Spulenstäbe verwendet. Diese können dann direkt im Fertigungsprozess mit eingebaut und das Segment vollständig imprägniert werden. Bei der Motor-/Generatormontage müssen dann lediglich die Segmentverbindungen (elektrische Verbindungen) angebracht werden. Wenn diese Verbindungsart zusätzlich noch so gewählt wird, dass sie zerstörungsfrei geöffnet werden kann, kommt als weitere Folge noch der Vorteil der viel einfacheren Segment-Tauschbarkeit hinzu.

## Patentansprüche

1. Elektrische Maschine (10) umfassend:
- ein erstes Aktivteil (12),
- ein zweites Aktivteil (16), wobei das zweite Aktivteil (16) in Bewegungsrichtung relativ zu dem ersten Aktivteil (12) bewegbar ist, wobei
- das erste Aktivteil (12) mindestens ein erstes Aktivteilsegment (22) und mindestens ein zweites Aktivteilsegment (24) umfasst, wobei
- das erste Aktivteil (12) mindestens eine Wicklung (14) aufweist, welche einen ersten Wicklungsabschnitt (26) und einen zweiten Wicklungsabschnitt (28) umfasst, wobei
- das erste Aktivteilsegment (22) Nuten (30) aufweist, in denen der erste Wicklungsabschnitt (26) angeordnet ist und das zweite Aktivteilsegment (24) Nuten (32) aufweist, in denen der zweite Wicklungsabschnitt (28) angeordnet ist,
- der erste Wicklungsabschnitt (26) ein erstes Anschlusselement (34) aufweist, welches an einer ersten Stirnseite (48) des ersten Aktivteilsegments (22) angeordnet ist, wobei
- der zweite Wicklungsabschnitt (28) ein zweites Anschlusselement (40) aufweist, welches an einer zweiten Stirnseite (48) des zweiten Aktivteilsegments (24) angeordnet ist, wobei
- die erste Stirnseite (48) des ersten Aktivteilsegments (22) und die zweite Stirnseite (52) des zweiten Aktivteilsegments (22) in Bewegungsrichtung des zweiten Aktivteils (16) aneinander angrenzend und parallel zueinander angeordnet sind, wobei
- das erste Anschlusselement (34) und das zweite Anschlusselement (40) nebeneinander angeordnet sind, wobei
- das erste (34) und das zweite Anschlusselement (40) verbunden sind, wobei
- das erste Anschlusselement (34) und das zweite Anschlusselement (40) in Bewegungsrichtung des zweiten Aktivteils (16) nebeneinander oder das erste Anschlusselement (34) und das zweite Anschlusselement (40) in Bewegungsrichtung des zweiten Aktivteils (16) senkrecht zur Bewegungsrichtung des zweiten Aktivteils (16) nebeneinander angeordnet sind,
**dadurch gekennzeichnet, dass**
- die mindestens eine Wicklung (14) mehrere Windungen (36, 42), welche mehrere Teilleiter (38,44) aufweist, umfasst, wobei
- in einem Segmentübergangsbereich die Windungen mit ihren Teilleitern des ersten Anschlusselements und des zweiten Anschlusselements freiliegen, wobei
- die Windungen (36) des ersten Anschlusselements (34) und die Windungen (42) des zweiten Anschlusselements (40) in Bewegungsrichtung des zweiten Aktivteils (16) abwechselnd nebeneinander oder die Windungen (36) des ersten Anschlusselements (34) und die Windungen (42) des zweiten Anschlusselements (40) in Bewegungsrichtung des zweiten Aktivteils (16) senkrecht zur Bewegungsrichtung des zweiten Aktivteils (16) nebeneinander angeordnet sind.

2. Elektrische Maschine (10) nach Anspruch 1, **dadurch gekennzeichnet, dass** die mindestens eine Wicklung (14) als Einschichtwicklung oder als Mehrschichtwicklung ausgebildet ist.

3. Elektrische Maschine (10) nach einem der vorhergehenden Ansprüche, **dadurch gekennzeichnet , dass** das erste Aktivteilsegment (22) und das zweite Aktivteilsegment (24) auf einem Trägerelement angeordnet sind.

4. Elektrische Maschine (10) nach einem der vorhergehenden Ansprüche, **dadurch gekennzeichnet , dass** das erste Anschlusselement (34) und das zweite Anschlusselement (40) mittels einer Anschlussverbindung (58) verbunden sind.

5. Elektrische Maschine (10) nach Anspruch 4, **dadurch gekennzeichnet, dass** die Anschlussverbindung (58) als Quetschverbindung oder als Lötverbindung ausgebildet ist.

6. Elektrische Maschine (10) nach einem der vorhergehenden Ansprüche, **dadurch gekennzeichnet, dass** das erste Anschlusselement (34) und/oder das zweite Anschlusselement (40) mittels eines Isolierelements elektrisch isoliert ist.

7. Elektrische Maschine (10) nach Anspruch 6, **dadurchgekennzeichnet**, dass das Isolierelement als Imprägnierharz und/oder Schrumpfschlauch ausgebildet ist.

8. Elektrische Maschine (10) nach einem der vorhergehenden Ansprüche, **dadurch gekennzeichnet, dass** das zweite Aktivteil (16) als Stator oder als Läufer ausgebildet ist.

9. Windkraftanlage mit einer elektrischen Maschine (10) nach einem der vorhergehenden Ansprüche.

## Claims

1. Electric machine (10), comprising:
- a first active part (12),
- a second active part (16), wherein the second active part (16) is able to be moved in the direction of movement relative to the first active part (12), wherein
- the first active part (12) comprises at least one first active part segment (22) and at least one second active part segment (24), wherein
- the first active part (12) has at least one winding (14), which comprises a first winding section (26) and a second winding section (28), wherein
- the first active part segment (22) has slots (30) in which the first winding section (26) is arranged and the second active part segment (24) has slots (32) in which the second winding section (28) is arranged,
- the first winding section (26) has a first terminal element (34), which is arranged on a first end face (48) of the first active part segment (22), wherein
- the second winding section (28) has a second terminal element (40), which is arranged on a second end face (48) of the second active part segment (24), wherein
- the first end face (48) of the first active part segment (22) and the second end face (52) of the second active part segment (22) are arranged such that they adjoin one another and are in parallel with one another in the direction of movement of the second active part (16), wherein
- the first terminal element (34) and the second terminal element (40) are arranged next to one another, wherein
- the first (34) and the second terminal element (40) are connected, wherein
- the first terminal element (34) and the second terminal element (40) are arranged next to one another in the direction of movement of the second active part (16) or the first terminal element (34) and the second terminal element (40) are arranged next to one another in the direction of movement of the second active part (16) perpendicular to the direction of movement of the second active part (16),
**characterised in that**
- the at least one winding (14) comprises a plurality of windings (36, 42), which have a plurality of partial conductors (38, 44), wherein
- in a segment transition region, the windings are exposed with their partial conductors of the first terminal element and the second terminal element, wherein
- the windings (36) of the first terminal element (34) and the windings (42) of the second terminal element (40) are arranged next to one another on an alternating basis in the direction of movement of the second active part (16) or the windings (36) of the first terminal element (34) and the windings (42) of the second terminal element (40) are arranged next to one another in the direction of movement of the second active part (16) perpendicular to the direction of movement of the second active part (16).

2. Electric machine (10) according to claim 1,
**characterised in that** the at least one winding (14) is embodied as a single-layer winding or as a multi-layer winding.

3. Electric machine (10) according to one of the preceding claims, **characterised in that** the first active part segment (22) and the second active part segment (24) are arranged on a carrier element.

4. Electric machine (10) according to one of the preceding claims, **characterised in that** the first terminal element (34) and the second terminal element (40) are connected by means of a terminal connection (58).

5. Electric machine (10) according to claim 4,
**characterised in that** the terminal connection (58) is embodied as a crimp connection or as a soldered connection.

6. Electric machine (10) according to one of the preceding claims, **characterised in that** the first terminal element (34) and/or the second terminal element (40) is electrically isolated by means of an isolation element.

7. Electric machine (10) according to claim 6,
**characterised in that** the isolating element is embodied as an impregnation resin and/or a shrink-on tube.

8. Electric machine (10) according to one of the preceding claims, **characterised in that** the second active part (16) is embodied as a stator or as a rotor.

9. Wind turbine with an electric machine (10) according to one of the preceding claims.

## Revendications

1. Machine (10) électrique, comprenant :
- une première partie (12) active,
- une seconde partie (16) active, la seconde partie (16) active pouvant être mise en mouvement dans une direction de mouvement par rapport à la première partie (12) active, dans laquelle
- la première partie (12) active a au moins un premier segment (22) de partie active et au moins un second segment (24) de partie active, dans laquelle
- la première partie (12) active a au moins un enroulement (14), lequel comprend un premier tronçon (26) d'enroulement et un second tronçon (28) d'enroulement, dans laquelle
- le premier segment (22) de partie active a des encoches (30), dans lesquelles est disposé le premier tronçon (26) d'enroulement et le second segment (24) de partie active a des encoches (32), dans lesquelles est disposé le second tronçon (28) d'enroulement,
- le premier tronçon (26) d'enroulement a un premier élément (34) de connexion, qui est disposé sur un premier côté (48) frontal du premier segment (22) de partie active, dans laquelle
- le deuxième tronçon (28) d'enroulement a un second élément (40) de connexion, qui est disposé sur un second côté (48) frontal du second segment (24) de partie active, dans laquelle
- le premier côté (48) frontal du premier segment (22) de partie active et le second côté (52) frontal du second segment (24) de partie active sont, dans la direction de mouvement de la seconde partie (16) active, disposés en étant voisins l'un de l'autre et parallèles l'un à l'autre, dans laquelle
- le premier élément (34) de connexion et le second élément (40) de connexion sont disposés l'un à côté de l'autre, dans laquelle
- le premier (34) et le second éléments (40) de connexion sont reliés, dans laquelle
- le premier élément (34) de connexion et le deuxième élément (40) de connexion sont disposés l'un à côté de l'autre dans la direction de mouvement de la seconde partie (16) active ou le premier élément (34) de connexion et le second élément (40) de connexion sont disposés l'un à côté de l'autre dans la direction de mouvement de la seconde partie (16) active perpendiculairement à la direction de mouvement de la seconde partie (16) active,
**caractérisée en ce que**
- le au moins un enroulement (14) comprend plusieurs spires (36, 42), lequel a plusieurs conducteurs (38, 44) partiels, dans laquelle
- dans une partie de transition de segment, les spires, avec leurs conducteurs partiels du premier élément de connexion et du second élément de connexion, sont à découvert, dans laquelle
- les spires (36) du premier élément (34) de connexion et les spires (42) du second élément (40) de connexion sont disposées, dans la direction de mouvement de la seconde partie (16) active, les unes à côté des autres en alternance, ou les spires (36) du premier élément (34) de connexion et les spires (42) du second élément (40) de connexion sont disposées, dans la direction de mouvement de la seconde partie (16) active, les unes à côté des autres, perpendiculairement à la direction de mouvement de la seconde partie (16) active.

2. Machine (10) électrique suivant la revendication 1, **caractérisée en ce que** le au moins un enroulement (14) est constitué sous la forme d'un enroulement à une seule couche ou d'un enroulement à plusieurs couches.

3. Machine (10) électrique suivant l'une des revendications précédentes, **caractérisée en ce que** le premier segment (22) de partie active et le second segment (24) de partie active sont disposés sur un élément de support.

4. Machine (10) électrique suivant l'une des revendications précédentes, **caractérisée en ce que** le premier élément (34) de connexion et le second élément (40) de connexion sont reliés au moyen d'une liaison (58) de connexion.

5. Machine (10) électrique suivant la revendication 4, **caractérisée en ce que** la liaison (58) de connexion est constituée sous la forme d'un sertissage ou d'un brasage.

6. Machine (10) électrique suivant l'une des revendications précédentes, **caractérisée en ce que** le premier élément (34) de connexion et/ou le second élément (40) de connexion sont isolés électriquement au moyen d'un élément isolant.

7. Machine (10) électrique suivant la revendication 6, **caractérisée en ce que** l'élément isolant est constitué sous la forme d'une résine d'imprégnation et/ou d'un conduit souple rétractable.

8. Machine (10) électrique suivant l'une des revendications précédentes, **caractérisée en ce que** la seconde partie (16) active est constituée en stator ou en rotor.

9. Eolienne ayant une machine (10) électrique suivant l'une des revendications précédentes.
